# EUROPEAN PATENT APPLICATION

(11) **EP 2 610 200 A1**
(43) Date of publication of application: **03.07.2013**
(21) Application number: 10856336.2
(22) Date of filing: 24.08.2010
(51) Int. Cl.: B65H 39/00, B65B 69/00

(54) **MULTIFUNCTIONAL MECHANICAL GRIPPER AND SYSTEM AND METHOD FOR THE AUTOMATIC SUPPLY OF SHEETS OF PAPER FOR BOOKBINDING LINES THAT USE SAID GRIPPER.**

(71) Applicant: Ediciones Informatizadas, S.A., 28108 Madrid (ES)
(72) Inventor: RODRÍGUEZ FEIJOO, José Antonio, E-15328 Coruña (ES); GONZÁLEZ QUINTANA, Francisco, E-32901 Ourense (ES)
(74) Representative: Elzaburu Marquez, Alberto
(86) International application number: PCT/ES2010/070567
(87) International publication number: WO 2012/025641

(57) **Abstract**

Multi-function mechanical gripper (20) and system and procedure for automatic sheet (9) feeding for binding lines which use it. The multi-function mechanical gripper (20) comprises a means of attachment (21) to the end of a robot (3) arm (4) and a frame (22) with a fixed finger (23) and a moving finger (24) at the sides and additionally it also comprises a block (30) for opening the gripper (20), an assembly (40) for guiding the gripper (20) opening movement, means for blowing (25) and means for suction (26) on the side fixed (23) and moving (24) fingers, a horizontal measurement laser for the fixed finger (23) and a horizontal measurement laser for the moving finger (24), a strap (11) clamping and cutting block (50) for the packages (8) of sheets (9), a centring movement block (60) and a height stop unit (70) with sensor (71).

## Description

### Field of the invention

This invention refers to a multi-function mechanical gripper, especially applicable in the graphic arts, to an automated system for automatic feeding of sheets for binding lines and to a procedure for automatic feeding of sheets for binding lines.

### Background of invention

To carry out the binding process, machines are used which must be fed with the various sheets which constitute the final product (books, magazines or catalogues). There are machines known as "box feeders" which enable the sheets which form the book, catalogue or magazine to be deposited in an orderly manner.

Printing machines enable the printed sheets to be obtained, which need subsequent grouping and binding. The sheets are normally supplied to the feeders manually, as the bundles of sheets usually arrive palletised and tied with a strap and with two end boards for protection of the end sheets.

Spanish patent 480442, for a "Procedure and device for direct automatic manufacture of blocks for binding from printed sheets" describes a procedure in which the sheets are fed to the installation and various manufacturing steps are automated, speeding up the procedure. However, the problem of how to supply automatically the sheet bundles that may arrive palletised is not covered in this document.

Manual sheet feeding is usually slow and needs labour dedicated to it and hence is not very cost effective.

### Summary of the invention

The subject of this invention is to provide a multi-function mechanical gripper which enables depalletising and feeding the machines automatically with sheets, without the need for operators.

The invention provides a multi-function mechanical gripper, which comprises a means of attachment to the end of a robot arm and a frame with lateral fingers, one of which is fixed and the other moving, and which also comprises:
- a block for opening the gripper;
- an assembly for guiding the gripper opening movement;
- means for blowing and means for suction on the lateral fixed and moving fingers;
- a horizontal measurement laser for the fixed finger and a horizontal measurement laser for the moving finger;
- a clamping and cutting block for the strap of the packages of sheets;
- a centring movement block; and
- a height stop block with sensor.

Furthermore, an automated system is provided for automatic sheet feeding for binding lines, which comprise:
- self-guided pallet transport vehicles;
- various roller tracks;
- a robot guide rail;
- a robot which has a multi-function mechanical gripper of claims 1 to 6 at the end of its arm;
- various sheet feeders, with their respective pushers;
- means for system synchronisation and control.

A procedure is also provided for automatic sheet feeding for binding lines, comprising the following steps:
- feeding of the roller tracks with pallets;
- bringing the robot up to one of the pallets located closest to the robot rail;
- gripping of a package of sheets, by means of the gripper's fixed finger and moving finger;
- transport of the package of sheets to the sheet feeder;
- movement of the pusher to the start of the feeder;
- bringing the pusher up to the first sheet in the package located in the feeder;
- cutting of the securing strap;
- removal of the side boards from the package of sheets using suction;
- release of the side boards and strap into the waste removal elements designed for this.

By means of the configuration of the multi-function mechanical gripper of the invention, the functions that were previously carried out manually are automated, thus avoiding the involvement of operators in the sheet feeding process.

Another of the invention's advantages is that the waste produced (boards and straps) is deposited in waste removal elements designed for this.

Other advantageous embodiments of the invention are set out in the dependent claims.

### Brief description of the drawings

The subject of this invention will be illustrated below in a non-restrictive manner, by making reference to the accompanying drawings, in which:
Figure 1 shows a plan view of the installation for automatic sheet feeding into binding lines.
Figure 2 shows a schematic representation of the system for automatic feeding of strapped and palletised packages of sheets.
Figure 3 shows a perspective view of the robot and the rail along which it runs.
Figure 4 shows a perspective view of the feeder which supplies the sheets to the binding lines.
Figure 5 shows a perspective view of the gripper of the invention in the extended position.
Figure 6 shows a perspective view of the gripper of the invention in the retracted position.
Figure 7 shows an exploded view of the gripper of the invention with its various sub-assemblies.
Figure 8A shows the frame of the gripper of the invention.
Figures 8B and 8C show views of the blower assembly located on the fixed finger of the frame in Figure 8A.
Figure 9 shows the assembly for guiding the gripper opening movement;
Figure 10 shows the gripper opening block.
Figure 11A shows the clamping and cutting block for the strap of the packages of sheets.
Figure 11 B shows the blade holder for the block in figure 11A.
Figure 12 shows the centring movement block.
Figure 13 shows the height stop unit.
Figures 14A, 14B and 14C show different gripper positions with respect to the board for a package of sheets.

### Detailed description of the invention

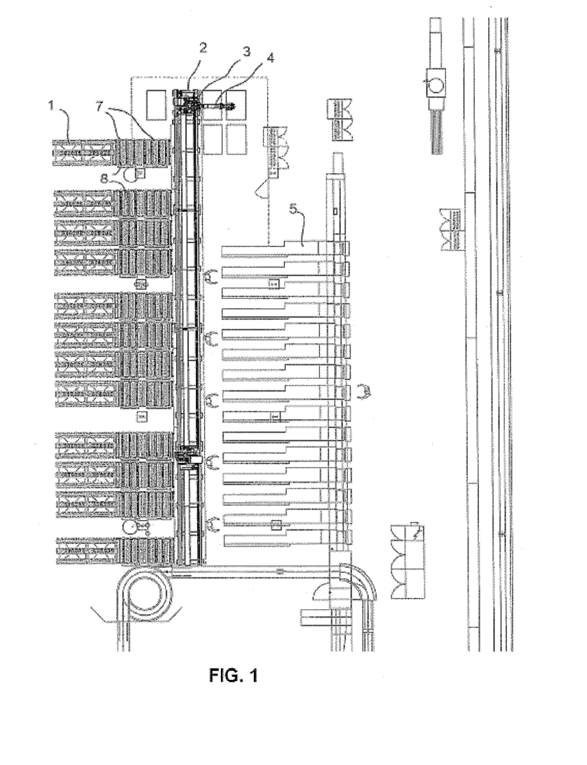

A plan view of the installation for automatic sheet feeding to binding lines, in which the subject of the invention is implemented, is represented in Figure 1. It can be seen in this and the subsequent figures that the automatic sheet 9 feeding system for binding lines comprises the following elements:
- self-guided pallet 7 transport vehicles (not shown);
- various roller tracks 1;
- a robot 3 guide rail 2;
- a robot 3 which has a multi-function mechanical gripper 20 at the end of its arm 4;
- various sheet 9 feeders 5, with their respective pushers 6;

These systems are also governed by means of system synchronisation and control.

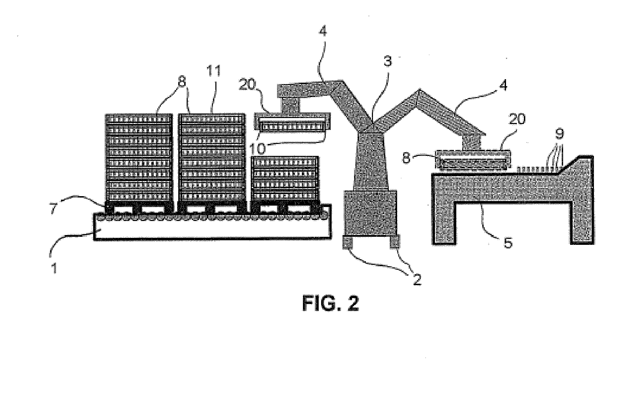

The pallets 7 with which the roller tracks or ways 1 are fed are composed of several packages or bundles 8 stacked vertically. In turn, each package 8 is composed of various sheets 9, as seen best in figure 2.

The packages 8 are banded packages, that is to say they are packaged using side boards 10 at the ends and a surrounding strap 11.

Preferably, the packages 8 will be between 850 and 1,050 mm long.

The packages 8 will come, as a general rule, with a single strap 11, although under special conditions two straps 11 are permitted if the location specifications are observed.

The size of the boards 10 will need to suit the paper size of the sheets 9 which form the package 8. The system is designed to perform irregular depalletising, in which the packages 8 can come it a variety of shapes, sizes and positions within margins which permit proper operation of the robot 3 arm 4.

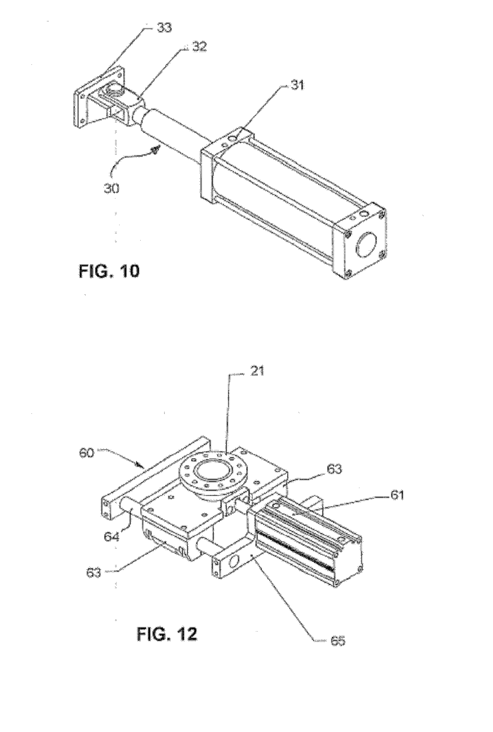

In the installation in Figure 1, 12 independent lines are represented, each made up of a driven roller track 1 fed with pallets 7 by means of a self-guided vehicle (not shown). Each line can accumulate 4 pallets 7, which can have a maximum weight of 1,500 kg each.

In Figures 1, 2 and 3, the rail 2 along which the robot 3 runs can be seen, in the area corresponding to the roller tracks 1 and the area corresponding to the sheet 9 feeder 5 for the binding machines.

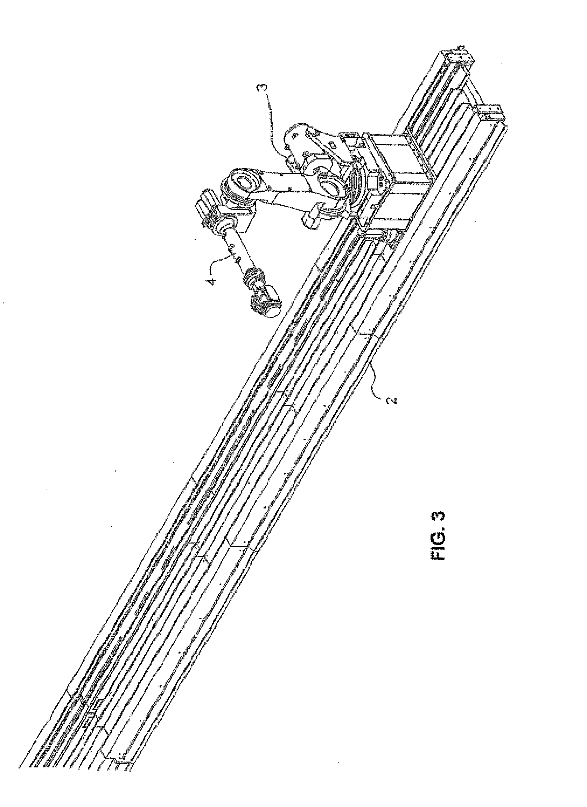

The robot 3 used (which can be seen best in Figure 3) is a commercial robot. For example, a Fanuc R-2000iB, with a load capacity of 165 kg and 6 degrees of freedom, can be used, as represented in the figure. The mechanical gripper 20 which is the subject of this invention is attached to the robot's 3 free end.

The installation also has elements for evacuating the boards 10 and the straps 11 removed from the packages 8 during the process.

Furthermore, the installation is equipped with a synchronisation panel or main control panel containing the PLC which manages the system operation for automatic sheet 9 feeding for binding lines. This control panel has an algorithm implemented which calculates and prioritises deliveries to the feeders 5 and communicates with the robot 3 and all the feeders 5 through a data network. The associated software enables it to calculate and parametrize the unloading positions of the packages 8, the heights and order of the sheets 9 for the feeders 5.

Similarly, the robot 3 has communication and positioning software implemented.

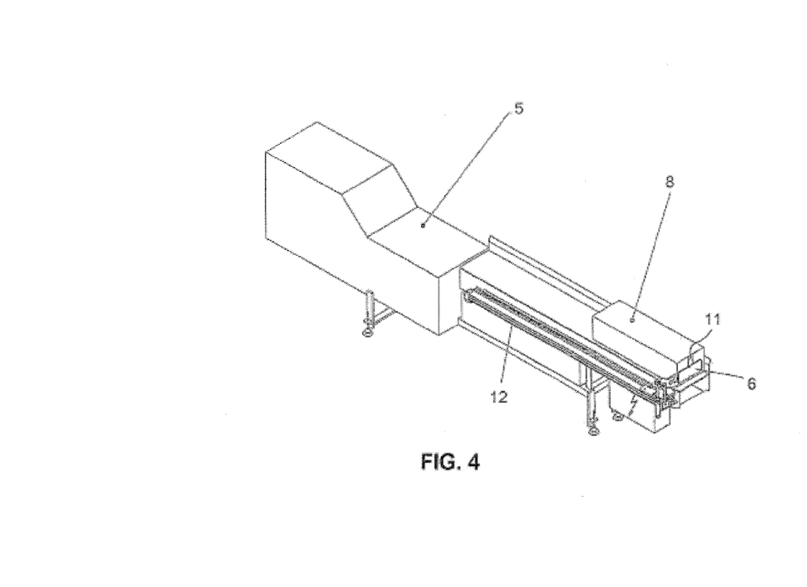

The sheet 9 feeder 5 (Figure 4) is also equipped with a series of mechanical elements to facilitate the unloading of the packages 8 of sheets 9 onto it, synchronising the gripping of the sheets 9 fed by the robot 3, specifically:
- a pusher 6 to push the paper onto the feeder 5 with the capability to raise and lower and a magnetic strip which indicates the position in the feeder 5;
- a cylinder 12 located at one side and firmly fixed to a linear guide on which the pusher 6 slides;
- a series of output detectors to communicate to the system the position of the paper pushing system at all times.

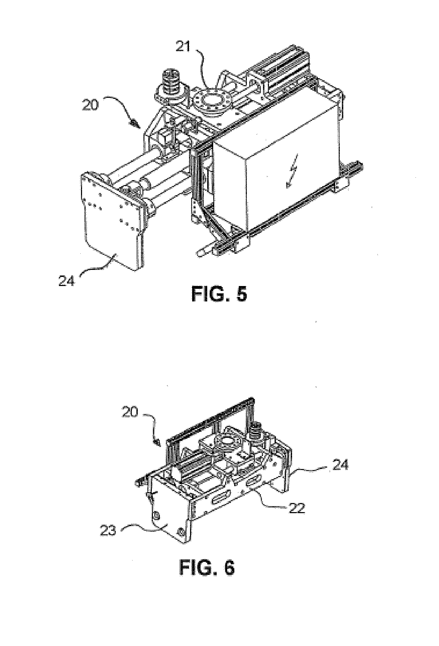

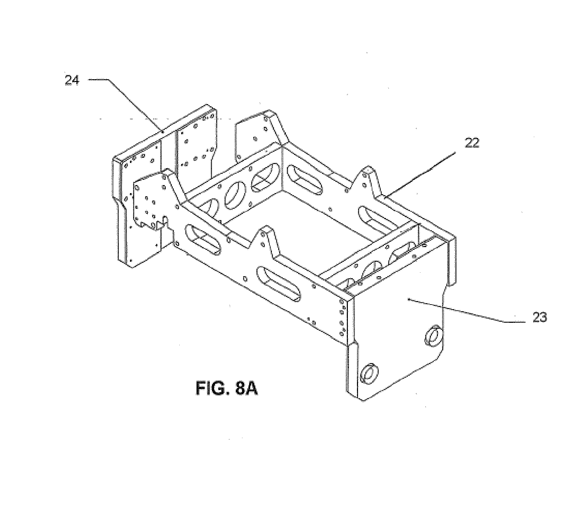

Figures 5 to 7 show different views of the multi-function mechanical gripper 20 of the invention and Figures 8A to 13 are views of the sub-assemblies of which it is composed.

The gripper 20 is composed, among other components, of a frame 22 with one fixed finger 23 and one moving finger 24 at the sides and at the top it has a means 21 of attachment to the end of a robot 3 arm 4, of the type represented in Figure 3, for example. This means 21 of attachment can be a flange, for example.

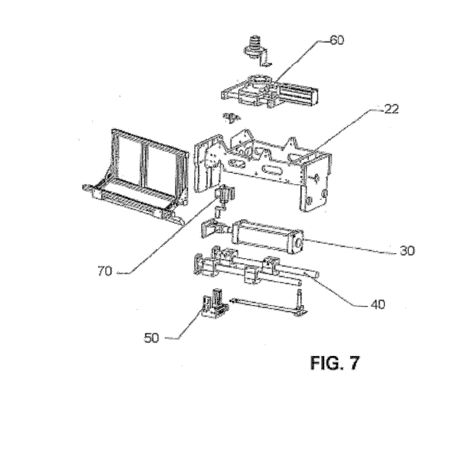

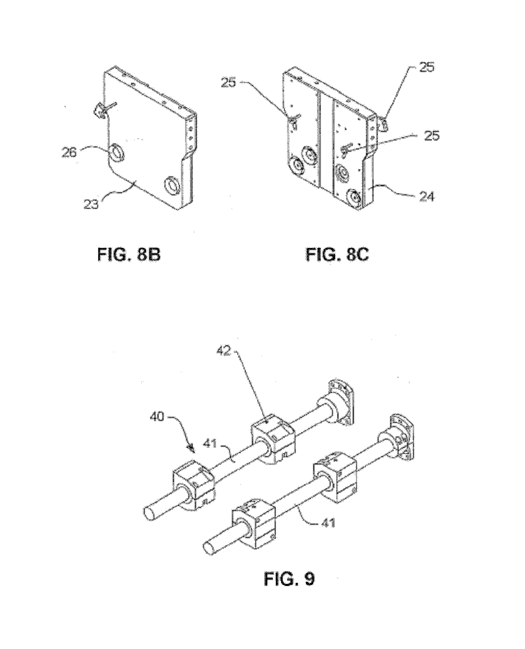

There are other sub-assemblies which also form a part of the gripper 20, which can clearly be seen in Figure 7 and which are detailed below:
- a block 30 for opening the gripper 20 (Figure 10);
- an assembly 40 for guiding the gripper 20 opening movement (Figure 9);
- means for blowing 25 and means for suction 26 on the side fixed and moving fingers (Figures 8B and 8C);

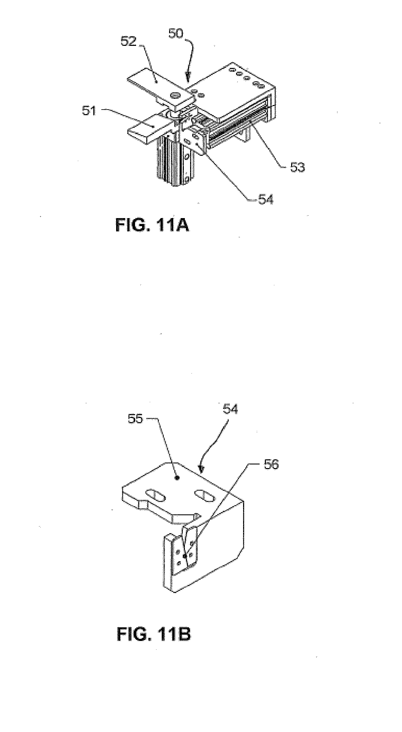

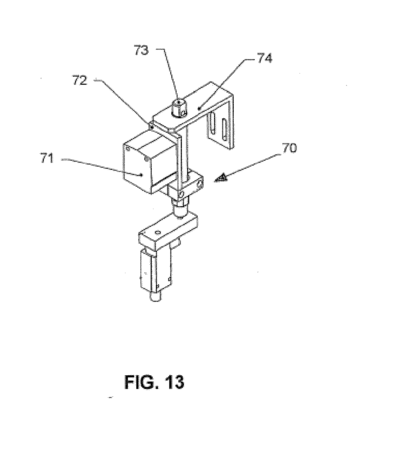

- a horizontal measurement laser for the fixed finger 23 and a horizontal measurement laser for the moving finger 24;
- a strap 11 clamping and cutting block 50 for the packages 8 of sheets 9 (Figure 11A and 11B);
- a centring movement block 60 (Figure 12); and
- a height stop unit 70 with sensor 71 (Figure 13).

The strap 11 clamping and cutting block 50 comprises (Figure 11A and 11B):
- a fixed finger 51;
- a clamping finger 52;
- two drive cylinders 53;
- a blade holder 54 sub-assembly comprising a squared plate 55 and a blade 56 mounted on it.

The centring movement block 60 comprises (Figure 12):
- a drive cylinder 61;
- a central block 62 which comprises the means 21 of attachment to the end of a robot 3 arm 4 and a pair of side guiding elements 63;
- a pair of side guides 64; and
- a pair of supports 65 for the side guides 64.

In this centring movement block 60, the cylinder 61 can act on the central block 62, which in turn can slide on the side guides 64.

On the other hand, the height stop unit 70 with sensor 71 comprises (Figure 13):
- a sensor 71;
- a squared plate 72 to support the sensor 71;
- a cylinder 73;
- a squared plate 74 to support the cylinder.

The gripper 20 opening block 30 comprises a drive cylinder 31 terminated at one end in a fork 32 and a fork end 33 (Figure 10).

The assembly 40 for guiding the gripper 20 opening movement comprises at least two side guides 41 which slide on the guiding elements 42 connected to the frame 22 and which have one of their ends attached to the moving finger 24 (Figure 9).

The automated procedure for sheets 9 for binding lines is performed using the system for the invention's installation, comprising the following steps:
- feeding of the roller tracks 1 with pallets 7;
- bringing the robot 3 up to one of the pallets 7 located closest to the robot 3 rail 2;
- gripping of a package 8 of sheets 9, by means of the gripper's 20 fixed finger 23 and moving finger 24;
- transport of the package 8 of sheets 9 to the sheet 9 feeder 5;
- movement of the pusher 6 to the start of the feeder 5;
- bringing the pusher 6 up to the first sheet 9 in the package 8 located in the feeder 5;
- cutting of the securing strap 11;
- removal of the side boards 10 from the package 8 of sheets 9 using suction;
- release of the side boards 10 using a removal system and the band 11 through a shredder built into the robot 3 chassis.

The multi-function mechanical gripper 20 plays an outstanding role in the procedure, as it permits the securing of the packages 8 of sheets 9 using the fixed 23 and moving 24 fingers (which clamp the package 8 side boards 10) and the suction means 26 (usually suction cups).

The gripper 20 will also be equipped with a pressure switch for gripper 20 nip and a suction pressure switch for the internal suction cups.

Furthermore, the means of blowing 25 (usually individual or double blowers) enable extraction of the boards 10 when their release is desired.

The clamping and cutting block 50 for the sheet 9 package 8 strap 11 enables, by means of the clamping finger 52 and the blade 56 mounted in the blade holder 54 sub-assembly (see Figure 11 B), the cutting of the band 11, its extraction and shredding.

The lateral lasers for the gripper 20 serve as automatic position locators for each package 8 on the pallet 7. The theoretical gripping position for the package 8 is calculated based on the position in which the gripper 20 lasers are found to be and the programmed board 10 width. The gripper 20 aligns itself with the package 8 by attempting to achieve a target measurement set for the lasers.

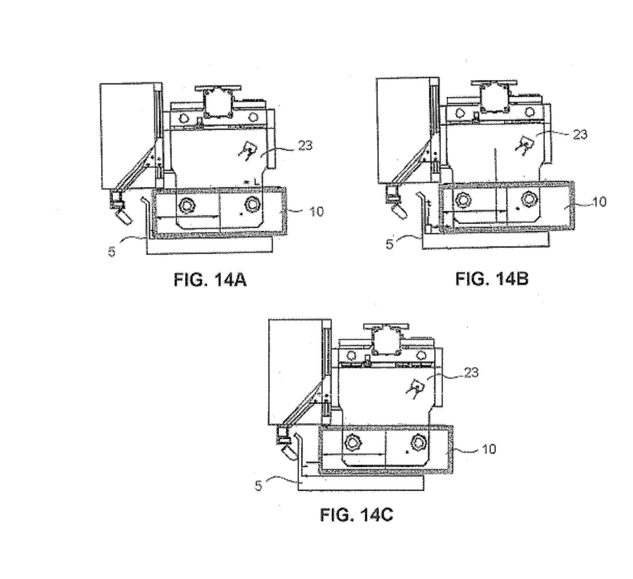

Figures 14A, 14B and 14C show the unloading position of the packages 8 (represented by the side board 10) on the feeder 5, taking into account possible deviations from their theoretical position (in each case, different distances are seen from the end of the board 10 with respect to the fixed side of the feeder 5).

Although some embodiments of the invention have been described and represented, it is clear that modifications comprised in its scope can be introduced and that it must not be considered to be limited to these embodiments, but solely to the contents of the following claims.

## Claims

1. A multi-function mechanical gripper (20) which comprises a means of connecting to the end of a robot arm and a frame with side fingers, one of which is fixed and the other moving, **characterised in that** it comprises in addition:
- a block (30) for opening the gripper (20);
- an assembly (40) for guiding the gripper (20) opening movement;
- means for blowing (25) and means for suction (26) on the side fixed and moving fingers;
- a horizontal measurement laser for the fixed finger and a horizontal measurement laser for the moving finger;
- a strap (11) clamping and cutting block (50) for the packages of sheets;
- a centring movement block (60); and
- a height stop block (70) with sensor.

2. A multi-function mechanical gripper (20), as per claim 1, **characterised in that** the strap (11) clamping and cutting block (50) comprises:
- a fixed finger (51);
- a clamping finger (52);
- two drive cylinders (53);
- a blade holder (54) sub-assembly comprising a squared plate (55) and a blade (56) mounted on it.

3. A multi-function mechanical gripper (20), as per any of the previous claims, **characterised in that** the centring movement block (60) comprises:
- a drive cylinder (61);
- a central block (62) which comprises the means of attachment to the end of a robot arm and a pair of side guiding elements (63);
- a pair of side guides (64); and
- a pair of supports (65) for the side guides (64);
such that the cylinder (61) can act on the central block (62), which in turn can slide on the side guides (64).

4. A multi-function mechanical gripper (20), as per any of the previous claims, **characterised in that** the height stop block (70) comprises:
- a sensor (71);
- a squared plate (72) to support the sensor (71);
- a cylinder (73);
- a squared plate (74) to support the cylinder.

5. A multi-function mechanical gripper (20), as per any of the previous claims, **characterised in that** the block (30) for opening the gripper (20) comprises a drive cylinder (31) which terminates at one end in a fork (32) and a fork end (33).

6. A multi-function mechanical gripper (20), as per any of the previous claims, **characterised in that** the assembly (40) for guiding the gripper (20) opening movement comprises at least two side guides (41) which slide on the guiding elements (42) connected to the frame and which have one of their ends attached to the moving finger.

7. An automatic sheet (9) feeding system for binding lines, **characterised in that** it comprises:
- self-guided pallet transport vehicles;
- various roller tracks (1);
- a robot (3) guide rail (2);
- a robot (3) which has a multi-function mechanical gripper (20) of claims 1 to 6 at the end of its arm (4);
- various sheet (9) feeders (5), with their respective pushers (6);
- means for system synchronisation and control.

8. A procedure for automatic sheet (9) feeding for binding lines, **characterised in that** it comprises the following stages:
- feeding of the roller tracks (1) with pallets (7);
- bringing the robot (3) up to one of the pallets (7) located closest to the robot (3) rail (2);
- gripping of a package (8) of sheets (9), by means of the fixed finger (23) and moving finger (24) of the gripper (20);
- transport of the package (8) of sheets (9) to the sheet (9) feeder (5);
- movement of the pusher (6) to the start of the feeder (5);
- bringing the pusher (6) up to the first sheet in the package (8) located in the feeder (5);
- cutting of the securing strap (11);
- removal of the side boards (10) from the package (8) of sheets (9) using suction;
- release of the side boards (10) using a removal system and the strap (11) through a shredder built into the robot (3) chassis.
